Europäisches Patentamt

European Patent Office

Office européen des brevets

(11) Veröffentlichungsnummer: **0 164 118 B1**

# EUROPÄISCHE PATENTSCHRIFT

(45) Veröffentlichungstag der Patentschrift: **02.05.91**

(51) Int. Cl.⁵: **H02P 6/02**

(21) Anmeldenummer: **85106997.1**

(22) Anmeldetag: **05.06.85**

(54) Antriebsanordnung mit kollektorlosem Gleichstrommotor.

(30) Priorität: **06.06.84 US 617629**

(43) Veröffentlichungstag der Anmeldung:
**11.12.85 Patentblatt 85/50**

(45) Bekanntmachung des Hinweises auf die
Patenterteilung:
**02.05.91 Patentblatt 91/18**

(84) Benannte Vertragsstaaten:
**DE FR GB IT NL**

(56) Entgegenhaltungen:
**DE-A- 3 128 417**

(73) Patentinhaber: **PAPST-MOTOREN GmbH & Co. KG**
**Karl-Maier-Strasse 1 Postfach 35**
**W-7742 St. Georgen/Schwarzwald 1(DE)**

(72) Erfinder: **von der Heide, Johann, Dipl.-Ing.**
**Marktstrasse 15**
**W-7230 Schramberg(DE)**

(74) Vertreter: **Schwan, Gerhard, Dipl.-Ing.**
**Elfenstrasse 32**
**W-8000 München 83(DE)**

## Beschreibung

Die Erfindung betrifft eine Antriebsanordnung mit einem kollektorlosen Gleichstrommotor, der einen Rotor mit einer Dauermagnetanordnung, die mindestens zwei Polpaare sowie im Bereich eines der Magnetpole eine Felddiskontinuität in Form einer Feldstärkeerhöhung bildet, mindestens einen stationären Magnetfeldsensor und eine Kommutierungssignal-Generatorstufe aufweist, sowie mit einer in Abhängigkeit von der Felddiskontinuität jeweils ein Indexsignal pro Rotorumdrehung erzeugenden Indexsignal-Generatorstufe, wobei die Kommutierungssignal-Generatorstufe mit einem an den Magnetfeldsensorausgang angeschlossenen Kommutierungskomparator versehen ist, dessen beide Umschaltpunkte im Bereich des auf die Polpaare zurückzuführenden Magnetfeldsensor-Ausgangssignals liegen, und die Indexsignal-Generatorstufe einen Indexkomparator aufweist, dessen einer Umschaltpunkt im Bereich des der Feldstärkeerhöhung entsprechenden Magnetfeldsensor-Ausgangssignals liegt.

Bei bekannten Anordnungen dieser Art (US-PS 4 430 603) läßt die erzielbare Genauigkeit des Indexsignals häufig zu wünschen übrig. Unter Indexsignalgenauigkeit soll dabei ververstanden werden, daß das Indexsignal exakt immer dann auftritt, wenn der Rotor eine vorbestimmte Stellung relativ zum Stator einnimmt. Insbesondere können bei der bekannten Lösung Änderungen der Magnetfeldamplitude, beispielsweise bedingt durch Einbautoleranzen, einen Temperaturgang des dort zusätzlich zu dem Magnetfeldsensor der Kommutierungssignal-Generatorstufe vorgesehenen Magnetfeldsensors der Indexsignal-Generatorstufe, Alterungserscheinungen oder dergleichen zu Verschiebungen des Indexsignals derart führen, daß das Indexsignal mit der vorbestimmten Stellung zwischen Rotor und Stator (im folgenden auch kurz als Nullstellung bezeichnet) nicht mehr genau übereinstimmt. Dies ist beispielsweise bei Anwendung des Antriebs für Festplattenspeicher äußerst störend, wo ein Indexsignal zur exakten Erkennung des Spuranfangs benötigt wird.

Eine weitere Schaltungsanordnung ist aus DE-A- 3 128 417 Bekannt. Die erfindungsgemäße Lösung unterscheidet sich von dem Stand der Technik, welcher diesem Dokument zu entnehmen ist, nicht nur dadurch, daß sie einen einzigen Magnetfeldsensor vorsieht, sondern auch dadurch, daß als Indexanzeige der Rücksprung des Ausgangssignals des Magnetfeldsensors dient, der zu einem Zeitpunkt veranlaßt wird, der mindestens näherungsweise mit dem dem Höcker nächstfolgenden Nulldurchgang des Ausgangssignals des einzigen Magnetfeldsensors zusammenfällt und der im Bereich großer Flankensteilheit des Ausgangssignals des Magnetfeldsensors liegt.

Durch diese von der bekannten Anordnung grundsätzlich abweichende Schaltungsauslegung wird die Genauigkeit der Indexanzeige entscheidend verbessert.

Der Erfindung liegt die Aufgabe zugrunde, eine Antriebsanordnung der eingangs genannten Art zu schaffen, die eine erhöhte Genauigkeit des Indexsignals gewährleistet. Die Anordnung soll sich ferner durch einen einfachen und kostensparenden Aufbau auszeichnen.

Erfindungsgemäß wird diese Aufgabe entsprechend dem Wortlaut von Anspruch 1 gelöst.

Die erfindungsgemäße Lösung kommt mit einem einzigen Magnetfeldsensor aus, der eine Doppelfunktion erfüllt, indem er sowohl den Kommutierungskomparator als auch den Indexkomparator ansteuert. Es wird eine wesentliche Erhöhung der Genauigkeit des Indexsignals erreicht, weil der Nulldurchgang des Magnetfeldsensor-Ausgangssignals praktisch unabhängig von Störeinflüssen, wie beispielsweise Änderungen der Feldamplitude, ist. Die Breite des Indexsignals läßt sich in Abhängigkeit von den jeweiligen Bedürfnissen in weiten Grenzen vorgeben, indem ein entsprechender Abstand der Felddiskontinuität von dem benachbarten Nulldurchgang des Kommutierungssignals gewählt wird. Die Antriebsanordnung eignet sich unter anderem für den Direktantrieb von signalverarbeitenden Geräten, insbesondere Plattenspeichern.

Als Magnetfeldsensor kann insbesondere ein Hallgenerator mit antivalenten Ausgängen vorgesehen sein, dem die Komparatoren nachgeschaltet sind. Grundsätzlich kommen aber auch beliebige andere Magnetfeldsensoren in Betracht, beispielsweise Hall-ICs, Feldplatten, Magnetdioden und dergleichen.

Zur Erzwingung der Unsymmetrie der Umschaltpunkte des Indexkomparators kann eine äußere Beschaltung vorgesehen sein, die eine unsymmetrische Belastung der Steuereingänge des Indexkomparators verursacht. Stattdessen kann an den Ausgang des Indexkomparators auch ein Ausgangsspannungsteiler angeschlossen sein, von dem eine Ausgangsteilspannung als Mitkopplungssignal auf den nichtinvertierenden Steuereingang des Indexkomparators zurückgeführt wird.

Entsprechend einer bevorzugten Ausführungsform der Erfindung ist der Kommutierungskomparator mit einer Rückführung versehen, die derart ausgebildet ist, daß eine Einwirkung des Kommutierungssignals auf den Steuereingang des Indexkomparators erfolgt. Der Indexkomparator wird auf diese Weise von dem Kommutierungskomparator beeinflußt. Die Umschaltpunkte des Kommutierungskomparators können genau auf der Nullinie des Magnetfeldsensor-Ausgangssignals liegen, und die beiden Komparatoren können vorteilhaft derart gekoppelt sein, daß der Kommutierungskomparator für ein Einwirken auf den Indexkomparator freigegeben wird, wenn der Indexkomparator in der durch die Felddiskontinuität bewirkten Schaltstellung steht. In diesem Fall dient der Indexkomparator praktisch nur zur Vorbereitung des Indexsignals, dessen den Nullpunkt der Relativstellung zwischen Rotor und Stator bestimmende Flanke dann durch den nächstfolgenden hochgenauen Nulldurchgang des Kommutierungssignals bestimmt wird.

Zweckmäßig ist dabei der Kommutierungskomparator mit einer dynamischen Rückkopplung von seinem Ausgang auf seinen nichtinvertierenden Steuereingang versehen. Im Rückkopplungszweig des Kommutierungskomparators kann für diesen Zweck eine Reihenschaltung aus einem Widerstand und einem Kondensator liegen.

Zur Temperaturkompensation kann; wenn als Magnetfeldsensor ein Hallgenerator vorgesehen ist, letzterer vorteilhaft aus einer Spannungsquelle gespeist sein, deren Innenwiderstand so gewählt ist, daß der Temperaturkoeffizient der Halldifferenzausgangsspannung vermindert ist. Als Spannungsquelle kann dabei einfach eine aus der Versorgungsspannung gespeiste Kombination aus Vorwiderständen und einem Parallelwiderstand zu den Speisespannungseingängen des Hallgenerators vorgesehen sein.

Die Erfindung ist im folgenden anhand von bevorzugten Ausführungsbeispielen unter Bezugnahme auf die beiliegenden Zeichnungen näher erläutert. Es zeigen:

Fig. 1 einen Schnitt durch einen kollektorlosen Gleichstrommotor mit dauermagnetischem Außenrotor,

Fig. 2 eine Schaltungsanordnung zur Erzeugung der Kommutierungs-und Indexsignale bei einem Motor der in Fig. 1 veranschaulichten Art,

Fig. 3 eine abgewandelte Ausführungsform der Schaltungsanordnung zur Gewinnung der Kommutierungs- und Indexsignale,

Fig. 4 Signale wie sie bei den Schaltungsanordnungen nach den Fign. 2 und 3 auftreten,

Fign. 5 und 6 zwei weiter abgewandelte Ausführungsformen der Schaltungsanordnung zur Erzeugung der Kommutierungs-und Indexsignale, sowie

Fig. 7 Signale, wie sie bei den Schaltungsanordnungen nach den Fign. 5 und 6 auftreten.

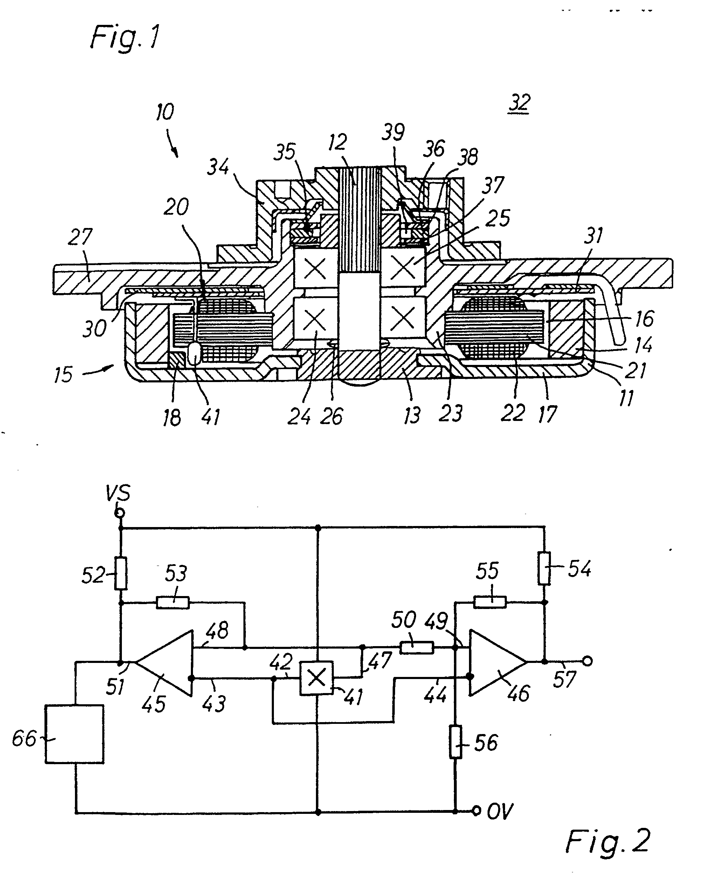

In Fig. 1 ist ein als kollektorloser Gleichstrommotor aufgebauter Außenläufer-Direktantriebsmotor für magnetische Festplattenspeicher veranschaulicht, der insgesamt mit 10 bezeichnet ist. Der Motor weist ein becherförmiges Rotorgehäuse 11 auf, das konzentrisch zu einer Rotorwelle 12 sitzt und mit dieser über eine Buchse 13 fest verbunden ist, die in eine Mittelöffnung des Rotorgehäuses eingepreßt ist. In dem aus magnetisch gut leitendem Werkstoff bestehenden Rotorgehäuse 11 sind eine Mehrzahl von Dauermagnetstücken oder ein einteiliger Dauermagnet 14 angebracht, der zusammen mit den Bauteilen 11 bis 13 den Rotor 15 des Motors 10 bildet. Der Dauermagnetring 14 besteht vorzugsweise aus einer Mischung von Hartferrit, z.B. Bariumferrit, und elastischem Material. Es handelt sich also um einen sogenannten Gummimagneten. Dieser ist über der Polteilung trapezförmig oder annähernd trapezförmig bei relativ kleiner Pollücke z.B. vierpolig radial magnetisiert, so daß an der dem zylindrischen Luftspalt 16 zugewendeten Innenseite des Dauermagnetrings 14 in wechselnder Folge zwei magnetische Nordpole und zwei magnetische Südpole vorhanden sind, die jeweils eine Breite von etwa 90° haben. Das Rotorgehäuse 11 kann als Tiefziehteil hergestellt sein. Es stellt einen magnetischen Rückschluß dar. In dem Eckbereich, der von dem Boden 17 des Rotorgehäuses 11 und dem Innenumfang des Dauermagnetrings 14 gebildet wird, ist an mit Bezug auf die Magnetisierung des Ringes 14 vorbestimmter Stelle ein z.B. würfelförmiger Indexmagnet 18 befestigt, z.B. in das Rotorgehäuse 11 eingeklebt.

Zu dem Stator 20 des Motors 10 gehört insbesondere ein Wicklungskern 21, der im allgemeinen die Form eines Statorblechpakets hat und eine Statorwicklung 22 trägt. Der Wicklungskern 21 ist auf einem rohrförmigen Lagertragteil 23 abgestützt. Die Rotorwelle 12 ist in dem Lagertragteil 23 mit Hilfe von zwei Kugellagern 24, 25 gelagert, die sich mit ihren einander zugewendeten Stirnseiten an entsprechenden Schultern des Lagertragteils 23 abstützen. Eine Tellerfeder 26 legt sich gegen die Unterseite des Innenrings des Kugellagers 24 und die diesem Kugellager zugewendete Stirnseite der Buchse 13 an, wodurch die Kugellager axial gegeneinander verspannt werden. Das Lagertragteil 23 bildet zusammen mit einem Befestigungsflansch 27 ein einstückiges Druckgußteil. Stattdessen kann das Lagertragteil auch mit Preßsitz in einer mit dem Befestigungsflansch verbundenen Nabe sitzen oder mit dem Befestigungsflansch auf andere Weise fest verbunden, z.B. verlötet sein. Der Magnetring 14 und der Wicklungskern 21 begrenzen den Luftspalt 16.

An der Unterseite des Befestigungsflanschs 27 befinden sich ein Abschirmblech 30 aus magnetisch gut leitendem Werkstoff und eine gedruckte Leiterplatte 31. Das Abschirmblech 30 verhindert in Verbindung mit dem Rotorgehäuse 11 und dem Kugellager 25 den Austritt von magnetischen Streufeldern in den von den Hartspeicherplatten eingenommenen Raum 32. Auf der Leiterplatte 31 sitzen die Antriebselektronik und gegebenenfalls eine Drehzahlregelschaltung, die nicht näher veranschaulicht sind.

Der Befestigungsflansch 27 gestattet es, den Motor 10 an einer Trennwand eines Festplattenspeichers anzubringen, die in bekannter Weise (z.B. DE-OS 31 08 204) den Raum 32 vom übrigen Geräteinneren abtrennt. Eine zur Aufnahme einer oder mehrerer Hartspeicherplatten dienende Nabe 34 ist mit dem in Fig. 1 oberen Ende der Rotorwelle 12 fest verbunden. Um das Lagersystem der Rotorwelle 12 gegenüber dem Speicherplattenaufnahmeraum 32 abzudichten, ist im Bereich zwischen der Nabe 34 und dem Lager 25 eine Magnetflüssigkeitsdichtung 35 in das Lagertragteil 23 eingesetzt. Die Dichtung 35 besteht aus zwei Polstücken 36, 37, einem zwischen den Polstücken sitzenden Permanentmagnetring 38 und einer magnetischen Flüssigkeit, die in einen Ringspalt 39 zwischen dem Magnetring 38 und der Rotorwelle 12 eingebracht ist.

An der Leiterplatte 31 ist auch ein Magnetfeldsensor 41 angebracht, bei dem es sich beispielsweise um einen Hallgenerator handelt und der in geringem Abstand von dem Boden 17 des Rotorgehäuses 11 in dem von dem Dauermagnetring 14 und dem Indexmagnet 18 erzeugten Magnetfeld liegt.

Entsprechend Fig. 2 ist der eine Ausgang 42 des Sensors 41 unmittelbar mit den invertierenden Eingängen 43, 44 eines Kommutierungskomparators 45 und eines Indexkomparators 46 verbunden. Der andere Ausgang 47 des Sensors 41, der antivalent mit Bezug auf den Ausgang 42 ist, steht mit dem nichtinvertierenden Eingang 48 des Kommutierungskomparators 45 in unmittelbarer Verbindung, während er an den nichtinvertierenden Eingang 49 des Indexkomparators 46 über einen Vorwiderstand 50 angeschlossen ist. Zwischen dem Ausgang 51 des Kommutierungskomparators 45 und dem positiven Speisespannungsanschluß VS liegt ein Widerstand 52. Über einen Rückkopplungswiderstand 53 ist der Ausgang 51 des Komparators 45 mit dessen nichtinvertierendem Eingang 48 verbunden. Zwischen dem Anschluß VS und dem anderen Speisespannungsanschluß OV liegt eine Reihenschaltung aus Widerständen 54, 55, 56. Die Verbindungsstelle der Widerstände 54, 55 ist an den Ausgang 57 des Indexkomparators 46 angeschlossen, während die Verbindungsstelle der Widerstände 55, 56 mit dem Eingang 49 des Komparators 46 in Verbindung steht.

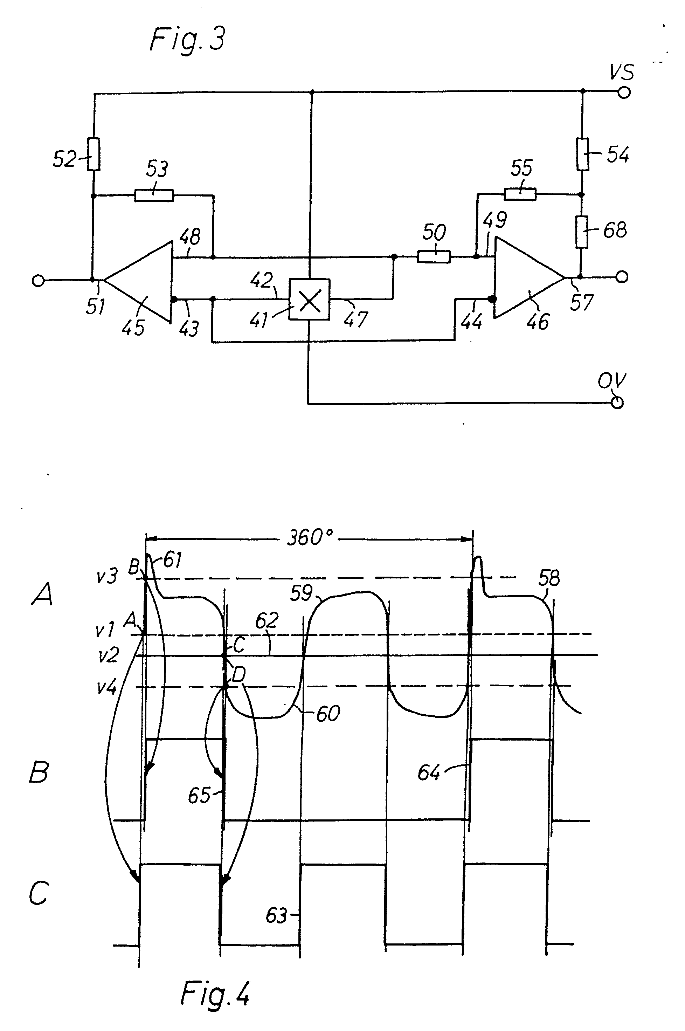

Zwischen den Ausgängen 42, 47 des Sensors 41 erscheint während jeder 360° Drehung des Rotors 15 ein Ausgangssignal 58 gemäß Fig. 4A. Infolge der vierpoligen Radialmagnetisierung des Dauermagnetrings 14 weist das Signal 58 für jede 360° Periode zwei positive und zwei damit abwechselnde negative Abschnitte 59, 60 von jeweils 90° Breite auf. Die Abschnitte 59 entsprechen beispielsweise dem Vorbeilauf der Südpole an dem Sensor 41, während die Abschnitte 60 auf den Vorbeilauf der Nordpole des Magnetrings 14 an dem Magnetfeldsensor 41 zurückzuführen sind. Wenn der Indexmagnet 18 an dem Sensor 41 vorbeiläuft, bewirkt er eine Felddiskontinuität in Form einer Feldstärkeerhöhung. In dem Ausgangssignal 58 tritt dadurch ein Höcker auf, wie er in Fig. 4A bei 61 angedeutet ist. Dieser Höcker 61 erscheint nur einmal während jeder vollen Umdrehung des Rotors 15. Die Widerstände 52, 53 sind so gewählt, daß der Kommutierungskomparator 45 eine Hysterese derart aufweist, daß seine beiden Umschaltpunkte in Fig. 4A bei A und C liegen. Das heißt, wenn das Ausgangssignal 58 die dem einen Schaltpunkt A entsprechende obere Schwellenspannung v1 überschreitet, springt der Ausgang 51 des Komparators 45 auf HIGH. Unterschreitet das Ausgangssignal 58 die dem Schaltpunkt C entsprechende, im wesentlichen mit der Nullinie 62 zusammenfallende, untere Schwellenspannung v2 des Komparators 45, springt der Komparatorausgang 51 auf LOW. Die unsymmetrische Belastung der Steuereingänge des Indexkomparators 46 durch die Widerstände 50, 54, 55, 56 erzwingt eine starke Unsymmetrie der Umschaltpunkte B, D (Fig. 4A) des Komparators 46. Die Schaltungsauslegung ist dabei so getroffen, daß die dem einen Schaltpunkt B entsprechende obere Schwellenspannung v3 im Bereich des Höckers 61 liegt, d.h. höher als die Maximalamplitude der Abschnitte 59. Dagegen liegt die dem anderen Umschaltpunkt D des Komparators 46 entsprechende untere Schwellenspannung v4 unterhalb der Nullinie 62, jedoch noch in einem Bereich großer Flankensteilheit des Ausgangssignals 58. Am Ausgang 51 des Kommutierungskomparators 45 erscheint daher das in Fig. 4C dargestellte Kommutierungssignal 63, während am Ausgang 57 des Indexkomparators 46 ein Indexsignal 64 gemäß Fig. 4B auftritt. Die negative Flanke 65 des Indexsignals 64 wird als Indexanzeige, d.h. als Anzeige für die Nullstellung des Rotors 15 gegenüber dem Stator 20, gewertet. Die Lage dieser Flanke 65 ist weitgehend unabhängig von Änderungen der Amplitude des Sensorausgangssignals 58, die beispielsweise durch Temperaturänderungen, Änderungen der Betriebsspannung, Abstandsänderungen zwischen dem Indexmagnet 18 und dem Magnetfeldsensor 41 sowie durch Alterungserscheinungen verursacht sein können. Das Kommutierungssignal geht an eine in Fig. 2 nur schematische angedeutete Kommutierungseinrichtung 66, die in bekannter Weise aufgebaut sein kann und die ihrerseits die Spulen der Statorwicklung 22 in Abhängigkeit von dem Kommutierungssignal 63 zyklisch mit Strom beaufschlagt.

Fig. 3 zeigt eine abgewandelte Schaltungsanordnung, die sich von derjenigen nach Fig. 2 dadurch unterscheidet, daß der Widerstand 56 fehlt sowie ein zusätzlicher Widerstand 68 zwischen dem Verbindungspunkt der Widerstände 54, 55 und dem Ausgang 57 des Indexkomparators 46 liegt. Die Widerstände 54, 68 bilden einen Ausgangsspannungsteiler, von dem zur Erzwingung der Unsymmetrie der Umschaltpunkte B, D des Indexkomparators 46 eine Ausgangsteilspannung über den Widerstand 55 als Mitkopplungssignal zu dem nichtinvertierenden Steuereingang 49 des Indexkomparators zurückgeführt wird. Die Arbeitsweise der Schaltungsanordnung nach Fig. 3 entspricht im übrigen weitgehend derjenigen, wie sie vorstehend für die Ausführungsform gemäß Fig. 2 anhand Fig. 4 erläutert ist.

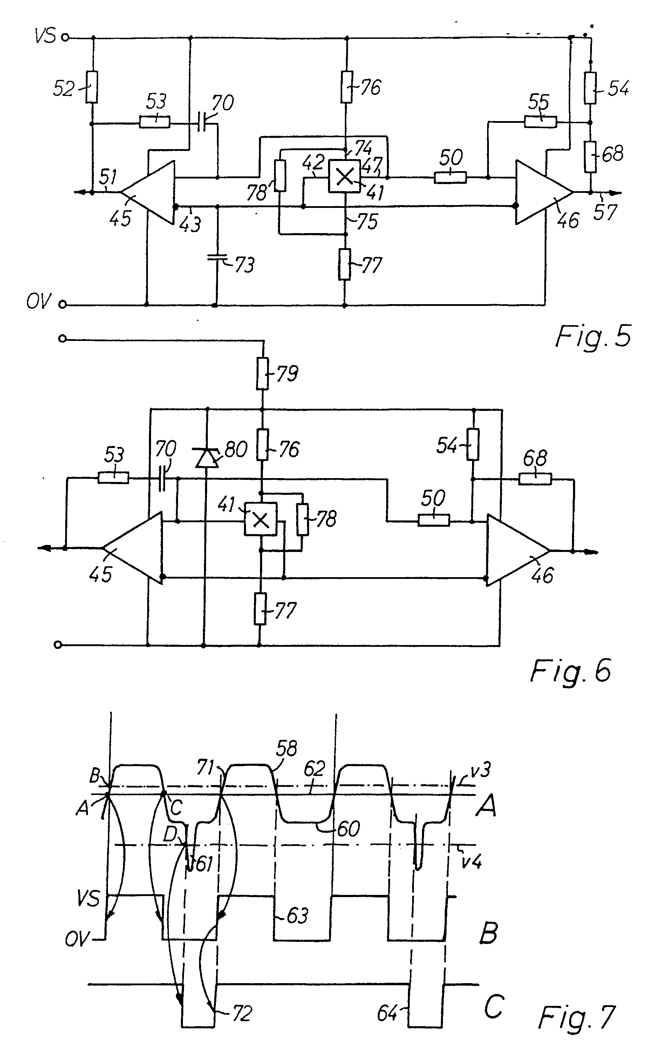

Bei dem bevorzugten weiteren Ausführungsbeispiel gemäß Fig. 5 ist in dem Rückkopplungszweig des Kommutierungskomparators 45 zusätzlich ein Kondensator 70 mit dem Widerstand 53 in Reihe geschaltet. Abweichend von den Lösungen der Fign. 2 und 3 ist ferner der Indexmagnet 18 im Bereich eines der beiden Nordpole des Permanentmagnetrings 38 angeordnet. Infolgedessen wird, wie in Fig. 7A dargestellt ist, eine Feldstärkeerhöhung (Diskontinuität) derart bewirkt, daß der Höcker 61 einem der negativen Abschnitte 60 des Ausgangssignals 58 zugeordnet ist. Über den Widerstand 53 und den Kondensator 70 erfolgt für den Kommutierungskomparator 45 eine dynamische Rückkopplung. Die Umschaltpunkte A, C des Kommutierungskomparators 45 liegen unmittelbar auf der Nullinie 62 des Magnetfeldsensor-Ausgangssignals 58. Die Widerstände 54, 55, 68 sind so gewählt, daß die Umschaltpunkte B, D so liegen, wie dies in Fig. 7A strichpunktiert angedeutet ist. Das heißt, die obere Schwellenspannung v3 liegt etwas über der Nullinie 62, während die untere Schwellenspannung v4 unterhalb der maximalen negativen Amplitude des auf den Magnetring 14 zurückzuführenden Ausgangssignals 58 im Bereich des Höckers 61 liegt. Bei der Schaltungsauslegung gemäß Fig. 5 ist jedoch für eine starke Kopplung zwischen den beiden Komparatoren 45, 46 derart gesorgt, daß nach einem am Umschaltpunkt D ausgelösten Umschalten des Indexkomparators 46 der Komparator 46 durch die darauf folgende positive Flanke 71 des Ausgangssignals 58 zum Zurückkippen gebracht wird, sobald diese Flanke ihren Nulldurchgang durchläuft. Durch diesen Nulldurchgang des Signals 58 wird der Kommutierungskomparator 45 umgeschaltet, der aufgrund der Kopplung beider Komparatoren den Indexkomparator 46 bereits an der dem Umschaltpunkt A entsprechenden, mit dem Nulldurchgang zusammenfallenden Stelle (statt erst am Umschaltpunkt B) ansprechen läßt. Mit anderen Worten, der Indexkomparator 46 wird durch die Felddiskontinuität (Höcker 61) vorbereitet. Kippt dann der Kommutierungskomparator 45 beim nächsten Nulldurchgang des Signals 58, wirft er aufgrund der durch die dynamische Rückkopplung bewirkten engen Kopplung beider Komparatoren den Indexkomparator 46 mit um. Die dabei am Ausgang 57 auftretende positive Flanke 72 fällt mit dem Nulldurchgang des Ausgangssignals 58 genau zusammen. Die Genauigkeit ist im Vergleich zu den Lösungen gemäß den Fign. 2 und 3 weiter gesteigert. Bei einer Zeit von beispielsweise 16.000 $\mu$s für eine ganze Umdrehung des Rotors 15 lassen sich mit der Schaltungsanordnung nach Fig. 5 Genauigkeiten für die Indexanzeige von etwa 8 $\mu$s ohne weiteres erreichen.

Zwischen dem invertierenden Eingang 43 des Komparators 45 und dem Anschluß OV liegt ein Kondensator 73. Dieser verhindert ein Schwingen des Komparators 45 während der Übergangsphasen des Ausgangs 51.

In Reihe mit den Speisespannungsanschlüssen 74, 75 des Magnetfeldsensors 41 liegen Vorwiderstände 76, 77. Parallel zu dem Sensor 41 ist ein Widerstand 78 geschaltet. Die Widerstände 76, 77, 78 sind so dimensioniert, daß eine Verminderung des Temperaturkoeffizienten der an den Ausgängen 42, 47 auftretenden Halldifferenz-Ausgangsspannung erreicht wird. Damit wird für eine besonders sichere Erkennung der Höcker 61 gesorgt.

Die Schaltungsauslegung gemäß Fig. 6 entspricht weitestgehend der nach Fig. 5. In diesem Falle erfolgt die Speisung der Anordnung über einen Vorwiderstand 79, mit dem eine Z-Diode 80 in Reihe geschaltet ist. Auf diese Weise wird für eine Speisespannungsstabilisierung gesorgt.

Gemeinsam ist allen erläuterten Ausführungsbeispielen, daß sie mit einem einzigen Magnetfeldsensor zur Gewinnung der Kommutierungs- und der Indexsignale auskommen. Der Magnetfeldsensor liefert das Ausgangssignal 58 bis herab zu beliebig niedrigen Drehzahlen. Er ist ferner unproblematisch, was Funkstörungen anbelangt.

Die in Fig. 1 veranschaulichte Art der Montage des Indexmagneten 18 und des mit dem Dauermagnetring 14 und dem Indexmagneten unter Bildung eines radialen Luftspalts zusammenwirkenden Magnetfeldsensors 41 hat insofern besondere Vorteile, als der Magnetfeldsensor 41 wirkungsvoll dem Feld der Magnete 14, 18 ausgesetzt, von dem unter einem abweichenden Einwirkungswinkel einfallenden Streufeld der Statorwicklung 22 jedoch nur minimal beeinflußt wird. Der Rotor 15 läßt sich vom Stator 20 abziehen bzw. auf den Stator aufsetzen, ohne daß dabei der Indexmagnet 18 im Weg ist. Die axiale Bauhöhe des Motors 10 ist besonders gering. Es versteht sich, daß die vorliegend offenbarte Art der Anbringung des Indexmagneten und des Magnetfeldsensors nicht auf eine bestimmte Ausbildung der Kommutierungssignal- und/oder der Indexsignal-Generatorstufe beschränkt ist.

## Ansprüche

1. Antriebsanordnung mit
   - einem kollektorlosen Gleichstrommotor (10), der versehen ist mit
     - einem Rotor (15), der
       - eine mit mindestens zwei Polpaaren versehene dauermagnetische Erregermagnetanordnung (14) zur Ausbildung eines Erregerfeldes und
       - einen dauermagnetischen Indexmagneten (18) aufweist, der für eine Feldstärkeerhöhung im Bereich eines der Magnetpole der Erregermagnetanordnung (14) sorgt; und
     - einem Stator (20), der eine Statorwicklung (22) trägt, die in Abhängigkeit Von einem Kommutierungssignal (63) mit Strom beaufschlagt wird;
   - einem einzigen stationären Magnetfeldsensor (41), der ein Ausgangssignal (58) abgibt,
     - das kennzeichnend für das im Bereich des Magnetfeldsensors (41) beim Vorbeilauf der Erregermagnetanordnung (14) und des Indexmagneten (18) momentan herrschende Magnetfeld ist, und
     - das durch die Erregermagnetanordnung bewirkte, abwechselnd auf entgegengesetzten Seiten einer Nullinie liegende Signalabschnitte (59,60) sowie einen Höcker (61) aufweist, der durch den Indexmagnet (18) verursacht und einem der Signalabschnitte (59, 60) überlagert ist;
   - einer Kommutierungssignal-Generatorstufe, die einen mittels des Ausgangssignals (58) des einzigen Magnetfeldsensors (41) angesteuerten Kommutierungskomparator (45) aufweist, dessen Ausgang unter Bildung des Kommutierungssignals (63)
     - von einem ersten auf einen zweiten Pegel springt, wenn das Ausgangssignal (58) des Magnetfeldsensors (41) über einen ersten Schwellwert (A) des Kommutierungskomparators (45) ansteigt, der von der Nullinie einen Kleineren Abstand als der Höchstwert der über der Nullinie liegenden Signalabschnitte (59) hat, und
     - von dem zweiten auf den ersten Pegel springt, wenn das Ausgangssignal (58) des Magnetfeldsensors (41) unter einen zweiten Schwellwert (C) des Kommutierungskomparators (45) abfällt, der von der Nullinie einen Kleineren Abstand als der Höchstwert der unter der Nullinie liegenden Signalabschnitte (60) hat; und
   - einer Indexsignal-Generatorstufe, die einen gleichfalls mittels des Ausgangssignals (58) des einzigen Magnetfeldsensors (41) angesteuerten Indexkomparator (46) aufweist, dessen Ausgang
     - von einem ersten auf einen zweiten Pegel springt, wenn das Ausgangssignal (58) des Magnetfeldsensors (41) einen Schwellwert (B) des Indexkomparators erreicht, der von der Nullinie einen Kleineren Abstand als der Höchstwert des Höckers (61), aber einen größeren Abstand als der Höchstwert des Plateaubereiches des mit dem Höcker (61) versehenen Signalabschnittes (59 bzw. 60) hat, und
     - unter Bildung einer Indexanzeige (Flanke 65 bzw. 72) zu einem Rücksprung von dem zweiten auf den ersten Pegel zu einem Zeitpunkt veranlaßt wird, der mindestens näherungsweise mit dem dem Höcker (61) nächstfolgenden Nulldurchgang des Ausgangssignals (58) des einzigen Magnetfeldsensors (41) zusammenfällt und im Bereich großer Flankensteilheit des Ausgangssignals (58) des Magnetfeldsensors (41) liegt.

2. Antriebsanordnung nach Anspruch 1, wobei als einziger Magnetfeldsensor (41) ein Hallgenerator mit antivalenten Ausgängen (42,47) vorgesehen ist, dem die Komparatoren (45,46) nachgeschaltet sind.

3. Antriebsanordnung nach Anspruch 1 oder 2, wobei zur Erzwingung einer Unsymmetrie der Umschaltpunkte des Indexkomparators (46) eine unsymmetrische Belastung der Steuereingänge des Indexkomparators über eine äußere Beschaltung (54,55,56) vorgesehen ist.

4. Antriebsanordnung nach Anspruch 1 oder 2, wobei zur Erzwingung einer Unsymmetrie der Umschaltpunkte des Indexkomparators (46) an den Ausgang (57) des Indexkomparators ein Ausgangsspannungsteiler (54,68) angeschlossen ist, von dem eine Ausgangsteilspannung als Mitkopplungssignal zu dem nichtinvertierenden Steuereingang (49) des Indexkomparators zurückgeführt wird.

5. Antriebsanordnung nach einem der vorhergehenden Ansprüche, wobei der Kommutierungskomparator (45) mit einer Rückführung (53,70) versehen ist, die derart ausgebildet ist, daß eine Einwirkung des Kommutierungssignals auf den Steuereingang (49) des Indexkomparators (46) erfolgt.

6. Antriebsanordnung nach einem der vorhergehenden Ansprüche, wobei die Umschaltpunkte des Kommutierungskomparators (45) genau auf der Nullinie (62) des Magnetfeldsensor-Ausgangssignals (58) liegen.

7. Antriebsanordnung nach Anspruch 5 oder 6, wobei die beiden Komparatoren (45,46) derart gekoppelt sind, daß der Kommutierungskomparator (45) für ein Einwirken auf den Indexkomparator (46) freigegeben wird, wenn der Indexkomparator in der durch die Felddiskontinuität (61) bewirkten Schaltstellung steht.

8. Antriebsanordnung nach einem der Ansprüche 5 bis 7, wobei der Kommutierungskomparator (45) mit einer dynamischen Rückkopplung (53, 70) von seinem Ausgang (51) auf seinen nichtinvertierenden Steuereingang (48) versehen ist.

9. Antriebsanordnung nach Anspruch 8, wobei im Rückkopplungszweig des Kommutierungskomparators (45) eine Reihenschaltung aus einem Widerstand (53) und einem Kondensator (70) liegt.

10. Antriebsanordnung nach einem der Ansprüche 2 bis 9, wobei der Hallgenerator zur Temperaturkompensation aus einer Spannungsquelle gespeist ist, deren Innenwiderstand so gewählt ist, daß der Temperaturkoeffizient der Halldifferenzausgangsspannung vermindert ist.

11. Antriebsanordnung nach Anspruch 10, wobei als Spannungsquelle eine an eine Speisespannungsquelle angeschlossene Kombination aus Vorwiderständen (76,77) und einem Parallelwiderstand (78) zum Hallgenerator vorgesehen ist.

12. Antriebsanordnung nach einem der vorhergehenden Ansprüche, wobei der kollektorlose Gleichstrommotor (10) als Außenläufermotor mit einem becherförmigen Rotorgehäuse (11) ausgebildet ist, in welchem die Erregermagnetanordnung (14) untergebracht ist, wobei der Indexmagnet (18) am Boden (17) des Rotorgehäuses (11) und am Innenumfang der Erregermagnetanordnung (14) sitzt, und wobei der einzige Magnetfeldsensor (41) der Dauermagnetanordnung (14) und dem Indexmagneten (18) mit radialem Luftspalt gegenübersteht.

13. Antriebsanordnung nach Anspruch 12, wobei der Magnetfeldsensor (41) an einer Leiterplatte (31) befestigt ist, die benachbart dem offenen Ende des Rotorgehäuses (11) angeordnet ist.

## Claims

1. Drive arrangement with a brushless direct current motor (10), which is provided with a rotor (15), which has a permanent magnetic exciting magnet arrangement (14) for forming an exciting field provided with at least two pole pairs and a permanent magnetic index magnet (18), which ensures a field strength increase in the vicinity of one of the magnetic poles of the exciting magnet arrangement (14), as well as a stator (20), which carries a stator winding (22) which, as a function of a commutating signal (63), is supplied with current; a single stationary magnetic field sensor (41), which supplies an output signal (58), which is characteristic of the magnetic field instantaneously prevailing in the vicinity of the magnetic field sensor (41) during the passage of the exciting magnet arrangement (14) and the index magnet (18) and which has the signal portions (59,60) brought about by the exciting magnet arrangement and alternately arranged on either side of a zero line, as well as a peak (61), which is caused by the index magnet (18) and is superimposed on one of the signal portions (59,60); a commutating signal generator stage, which has a commutating comparator (45) driven by means of the output signal (58) of the signal magnetic field sensor (41) and whose output, accompanied by the formation of a commutating signal (63), switches from a first to a second level if the output signal (58) of the magnetic field sensor (41) rises above a first threshold value (A) of the commutating comparator (45), which has a smaller distance from the zero line than the maximum value of the signal portions (59) above the zero line and switches from the second to the first level if the output signal (58) of the magnetic field sensor (41) drops below a second threshold value (C) of the commutating comparator (45), which has a smaller distance from the zero line than the maximum value of the signal portions (60) below the zero line; and an index signal generator stage, which also has an index comparator (46) driven by means of the output signal (58) of the single magnetic field sensor (41) and whose output switches from a first to a second level if the output signal (58) of the magnetic field sensor (41) reaches a threshold value (B) of the index comparator, which has a smaller distance from the zero line than the maximum value of the peak (61), but a larger distance than the maximum value of the plateau area of the signal portion (59 or 60) provided with the peak (61) and, accompanied by the formation of an index indicator (edge 65 or 72) is made to return from the second to the first level at a time which at least approximately coincides with the zero passage of the output signal (58) of the single magnetic field sensor (41) following the peak (61) and is in the vicinity of high edge steepness of the output signal (58) of the magnetic field sensor (41).

2. Drive arrangement according to claim 1, in which the single magnetic field sensor (41) is a Hall generator with differential outputs (42,47), with which the comparators (45,46) are connected in series.

3. Drive arrangement according to claims 1 or 2, in which for forcing an asymmetry of the switching points of the index comparator (46), there is an asymmetrical loading of the control inputs of the index comparator by means of external wiring (54,55,56).

4. Drive arrangement according to claims 1 or 2, in which for forcing an asymmetry of the switching points of the index comparator (46) an output voltage divider (54,68) is connected to the index comparator output and from it a partial output voltage is returned as a positive feedback signal to the non-inverting control input (49) of the index comparator.

5. Drive arrangement according to one of the preceding claims, in which the switching comparator (45) is provided with a feedback (53,70), which is constructed in such a way that the commutating signal acts on the control input (49) of the index comparator (46).

6. Drive arrangement according to one of the preceding claims, in which the switching points of the commutating comparator (45) are precisely located on the zero line (62) of the magnetic field sensor output signal (58).

7. Drive arrangement according to claims 5 or 6, in which the two comparators (45,46) are so coupled that the commutating comparator (45) is released for an action on the index comparator (46) if the index comparator is in the switching position brought about by the field discontinuity (61).

8. Drive arrangement according to one of the claims 5 to 7, in which the commutating comparator (45) is provided with a dynamic feedback (53,70) from its output (51) to its non-inverting control input (48).

9. Drive arrangement according to claim 8, in which a series connection of a resistor (53) and a capacitor (70) is located in the feedback branch of the commutating comparator (45).

10. Drive arrangement according to one of the claims 2 to 9, in which the Hall generator is supplied for temperature compensation purposes from a voltage source, whose internal resistance is chosen in such a way that the temperature coefficient of the Hall differential output voltage is reduced.

11. Drive arrangement according to claim 10, in which the voltage source is constituted by a combination of series resistors (76,77) and a parallel resistor (78) to the Hall generator connected to a supply voltage source.

12. Drive arrangement according to one of the preceding claims, in which the brushless direct current motor (10) is constructed as an external rotor-type motor with a cup-shaped rotor casing (11), in which is housed the exciting magnet arrangement (14), the index magnet (18) being located on the bottom (17) of the rotor casing (11) and on the inner circumference of the exciting magnet arrangement (14) and in which the sole magnetic field sensor (41) faces with a radial air gap the index magnet (18) and the permanent magnet arrangement (14).

13. Drive arrangement according to claim 12, in which the magnetic field sensor (41) is fixed to a circuit board (31), which is positioned adjacent to the open end of the rotor casing (11).

**Revendications**

1. Système d'entraînement comprenant :
   - un moteur à courant continu sans collecteur (10) qui est muni de :
     - un rotor (15) comportant :
       - un dispositif d'excitation magnétique (14) à aimantation permanente muni d'au moins deux paires de pôles pour constituer un champ magnétique, et :

- un aimant de repérage (18) à aimantation permanente qui produit une augmentation de l'intensité du champ dans la région de l'un des pôles magnétiques du dispositif d'excitation magnétique (14) ; et :
- un stator (20) qui porte une bobine statorique (22) soumise à l'action du courant en fonction d'un signal de commutation (63) ;

- un capteur de champ magnétique (41), fixe et unique, fournissant un signal de sortie (58) :

- qui est caractéristique du champ magnétique instantané régnant dans la région du capteur de champ magnétique (41) lorsque le dispositif d'excitation magnétique (14) et l'aimant de repérage (18) défilent l'un devant l'autre, et :
- qui présente des portions de signaux (59, 60) produites par le dispositif d'excitation magnétique et situées alternativement sur des côtés opposés d'une ligne de niveau zéro, ainsi qu'un pic (61) qui est produit par l'aimant de repérage (18) et qui est superposé à l'une des portions de signaux (59, 60);

- un étage générateur de signaux de commutation comportant un comparateur de commutation (45) qui est commandé au moyen du signal de sortie (58) du capteur de champ magnétique unique (41) et dont la sortie, en formant le signal de commutation (63) :

- saute d'un premier niveau à un second lorsque le signal de sortie (58) du capteur de champ magnétique (41) monte au-dessus d'une première valeur de seuil (A) du comparateur de commutation (45) qui présente par rapport à la ligne de niveau zéro une distance plus faible que la valeur la plus élevée de la portion de signal (59) située au-dessus de la ligne de niveau Zéro, et : saute du second niveau au premier lorsque le signal de sortie (58) du capteur de champ magnétique (41) tombe au-dessous d'une deuxième valeur de seuil (C) du comparateur de commutation (45) qui présente par rapport à la ligne de niveau zéro une distance plus faible que la valeur la plus élevée de la portion de signal (60) située au-dessous de la ligne de niveau zéro ; et :
- un étage générateur de signaux de repérage comportant un comparateur de repérage (46) qui est également commandé au moyen du signal de sortie (58) du capteur de champ magnétique unique (41) et dont la sortie :

- saute d'un premier niveau à un second lorsque le signal de sortie (58) du capteur de champ magnétique (41) atteint une valeur de seuil (B) du comparateur de repérage qui présente par rapport à la ligne de niveau zéro une distance plus faible que la valeur la plus élevée du pic (61), mais une distance plus élevée que la valeur la plus élevée de la région du plateau de la portion de signal (59 ou 60, respectivement) munie du pic (61), et :
- en formant un indicateur de repérage (front 65 ou 72, respectivement), est amenée à revenir du second niveau au premier à un instant qui coincide, du moins approximativement, avec le passage par le zéro du signal de sortie (58) du capteur de champ magnétique unique (41) qui est le premier à suivre le pic (61) et qui est situé dans une région où le front du signal de sortie (58) du capteur de champ magnétique (41) est très raide.

2. Système d'entraînement selon la revendication 1, dans lequel est prévu, comme capteur de champ magnétique unique (41), un générateur de Hall qui est muni de sorties à valeurs opposées (42, 47) et qui est monté à la suite des comparateurs (45, 46).

3. Système d'entraînement selon la revendication 1 ou 2, dans lequel, en vue d'obliger à une dissymétrie des points de commutation du comparateur de repérage (46), il est prévu une charge dissymétrique des entrées de commande du comparateur de repérage par l'intermédiaire d'un circuit extérieur (54, 55, 56).

4. Système d'entraînement selon la revendication 1 ou 2, dans lequel, en vue d'obliger à une dissymétrie des points de commutation du comparateur de repérage (46), un diviseur de tension de sortie (54, 68) est connecté à la sortie (57) du comparateur de repérage, diviseur depuis lequel une tension partielle de sortie est ramenée comme signal de couplage à l'entrée de commande non inversante (49) du comparateur de repérage.

5. Système d'entraînement selon l'une des revendications précédentes, dans lequel le comparateur de commutation (45) est muni d'une réaction (53, 70) qui est constituée de telle manière que le signal de commutation agisse sur l'entrée de commande (49) du comparateur de repérage (46).

6. Système d'entraînement selon l'une des revendications précédentes, dans lequel les points de commutation du comparateur de commutation (45) sont situés exactement sur la ligne de niveau zéro (62) du signal de sortie (58) du capteur de champ magnétique.

7. Système d'entraînement selon la revendication 5 ou 6, dans lequel les deux comparateurs (45, 46) sont couplés de telle manière que le comparateur de commutation (45) soit libéré pour agir sur le comparateur de repérage (46) lorsque le comparateur de repérage se trouve dans la position de commutation produite par la discontinuité (61) du champ.

8. Système d'entraînement selon l'une des revendications 5 à 7, dans lequel le comparateur de commutation (45) est muni d'un couplage de réaction dynamique (53, 70) allant de sa sortie (51) à son entrée de commande non inversante (48).

9. Système d'entraînement selon la revendication 8, dans lequel un circuit en série constitué par une résistance (53) et un condensateur (70) est placé dans la branche de couplage de réaction du comparateur de commutation (45).

10. Système d'entraînement selon l'une des revendications 2 à 9, dans lequel le générateur de Hall, en vue de la compensation de la température,, est alimenté à partir d'une source de tension dont la résistance interne est choisie de telle manière que le coefficient de température de la tension de sortie différentielle de Hall soit diminué.

11. Système d'entraînement selon la revendication 10, dans lequel il est prévu, comme source de tension, une combinaison, raccordée à une source de tension d'alimentation, de ` résistances en série (76, 77) et d'une résistance (78) montée en parallèle sur le générateur de Hall.

12. Système d'entraînement selon l'une des revendications précédentes, dans lequel le moteur à courant continu sans collecteur (10) est réalisé sous la forme d'un moteur à induit extérieur muni d'un carter de rotor (11) en forme de godet dans lequel est disposé le dispositif d'excitation magnétique (14), l'aimant de repérage (18) étant placé sur le fond (17) du carter (11) du rotor et sur le pourtour intérieur du dispositif d'excitation magnétique (14), et le capteur de champ magnétique unique (41) étant disposé en face du dispositif à aimant permanent (14) et de l'aimant de repérage (18) avec un entrefer radial.

13. Système d'entraînement selon la revendication 12, dans lequel le capteur de champ magnétique (41) est fixé à une carte de circuits imprimés (31) qui est disposée au voisinage de l'extrémité ouverte du carter (11) du rotor.

Fig.1

Fig.2

Fig.3

Fig.4

EP 0 164 118 B1

Fig. 5

Fig. 6

Fig. 7

13